# EUROPEAN PATENT SPECIFICATION

(11) **EP 1 943 900 B1**
(45) Date of publication and mention of the grant of the patent: **17.08.2011**
(21) Application number: 06797626.6
(22) Date of filing: 07.09.2006
(51) Int. Cl.: A01N 25/00, A01G 7/06, A01N 37/04, A01N 37/36, A01N 43/16

(54) **LOW LIGHT CULTIVATION METHOD AND PLANT GROWTH PROMOTING AGENT**
SCHWACHLICHT-KULTIVIERVERFAHREN UND PFLANZENWACHSTUMSFÖRDERER
MÉTHODE DE CULTURE SOUS LUMIÈRE FAIBLE ET AGENT DE PROMOTION DE CROISSANCE DE PLANTES

(30) Priority: 09.09.2005 JP 2005262445
(43) Date of publication of application: 16.07.2008
(73) Proprietor: Suntory Holdings Limited, Kita-ku, Osaka-shi, Osaka 530-8203 (JP); Hirasawa, Eiji, Osaka-shi, Osaka 545-0035 (JP)
(72) Inventor: HIRASAWA, Eiji, Osaka-shi, Osaka 545-0035 (JP); MIYAGAWA, Katsuro, Takatsuki-shi, Osaka 569-1022 (JP)
(74) Representative: Vossius & Partner
(86) International application number: PCT/JP2006/317753
(87) International publication number: WO 2007/029775

(56) References cited:
- WO-A-00/13502
- JP-A- 7 184 479
- JP-A- 02 178 203
- JP-A- 04 046 104
- JP-A- 04 363 388
- JP-A- 05 310 509
- JP-A- 07 184 479
- JP-A- 10 504 797
- JP-A- 11 269 018
- JP-A- 50 157 167
- JP-A- 52 050 879
- JP-A- 2001 316 207
- JP-A- 2004 187 622

## Description

### Technical Field

The present invention relates to a low light cultivation method for cultivating a plant under low light conditions while giving a plant growth promoting agent to the plant.

### Background Art

Basic environmental factors required for the growth of plants are light, water, temperature, soil, and the like. The growth of plants are maintained and promoted if these conditions are all well balanced and satisfied. Therefore, if even any one of these conditions is not well satisfied, plants may suffer from some stress, so that the growth may be inhibited.
Among other things, light (sunlight irradiation conditions) is particularly important to plants that perform photosynthesis. Such a plant suffers from low-light stress unless it is exposed to sufficient light due to lack of sunlight or the like. For example, houseplants or pot plants are often grown indoors or the like for decorative purposes, and are likely to suffer from low-light stress due to lack of sunlight.
Therefore, as one of the methods for reducing low-light stress on such plants, a method of cultivating the plants while giving 5-aminolevulinic acid and its salt (hereinafter referred to as 5-ALA) has been proposed (see Patent Document 1).
Patent Document 1: JP H07-184479 A

### Disclosure of Invention

### Problem to be Solved by the Invention

5-ALA is a type of amino acid that is a compound from which plants produce chlorophyll (green pigments). Therefore, it is probably contemplated that, by giving 5-ALA to a plant, chlorophyll synthesis is promoted inside the plant, so that the efficiency of light energy absorption increases, and therefore, low-light stress is reduced under low light conditions.
However, stress on plants under low light conditions is not limited only to low-light stress. For example, if houseplants, pot plants or the like are kept indoors without contacting fresh air during winter, the humidity of soil in the pot increases, so that bacteria and molds (harmful microorganisms) are likely to grow. Therefore, the plant is likely to suffer from various diseases (e.g., damping-off, etc.) mediated by those harmful microorganisms. Therefore, if a mold or the like grows in soil, a plant needs to be removed from the pot, and the soil needs to be replaced with new one (i.e., the plant is replanted), resulting in considerable time and effort.

In view of the problem described above, the present invention has been achieved. The present invention provides a low light plant cultivation method capable of reducing low-light stress even under low light conditions and suppressing harmful microorganisms, such as bacteria, molds or the like, from growing in soil.

### Means for Solving Problem

A first feature of the present invention is a low light cultivation method for cultivating a plant under low light conditions while giving a plant growth promoting agent to the plant, where the plant growth promoting agent contains at least one selected from citric acid, malic acid, and succinic acid.

### (Operational Effect)

Typically, when a plant is cultivated under low light conditions, the plant suffers from low-light stress and the capacity to fix carbon dioxide by photosynthesis is reduced, so that synthesis of an energy source (sugar) is hindered. As a result, energy required for growth (ATP) cannot be produced, so that the growth of the plant is inhibited.
However, if a plant is given a plant growth promoting agent containing at least any one of citric acid, malic acid, and succinic acid (hereinafter referred to as TCA organic acids), which belong to a group of organic acids that constitute the TCA cycle (a portion of a metabolic pathway (respiration) that can produce ATP), the plant can absorb the TCA organic acid and use the TCA organic acid as an energy source instead of sugars to produce ATP. Therefore, even if there is a shortage of sugars, which are original energy sources, the growth of the plant can be maintained and promoted.
Further, the TCA organic acids all have a high level of acid buffering capacity. By adding the TCA organic acids to soil into acidic conditions, the growth of bacteria and molds (harmful microorganisms) can be suppressed, thereby causing the soil to be in a bacteriostatic state. As a result, various diseases mediated by harmful microorganisms are prevented from occurring, so that the plant growth can be further maintained and promoted, and an effort, such as replanting or the like, is no longer required.
Note that, in this case, it may be expected that a problem arises with the acid resistance of plants. Actually, the TCA organic acids can enhance the acid resistance of plants, so that no problems are likely to occur.
This is probably for the following reason. The TCA organic acids are absorbed by root cells of roots, so that the ATP production is promoted in the root cells as described above. ATP proton pumps (proton-ATPase) that exist in the cell membrane of the root cell use the produced ATP to pump out hydrogen ions which are passively absorbed by the root cell under acidic conditions, to extracellular space (active transport), so that the activity to consistently maintain intracellular space at neutral pH is increased.
Note that the TCA organic acids are commercially available and commonly used as food additives, such as acidulants, flavors, stabilizers, enhancers, and the like, and can be obtained inexpensively and easily.

A second feature of the present invention is that the plant growth promoting agent further includes a sugar or sugars.

### (Operational Effect)

A sugar that is given along with the TCA organic acid is absorbed by a plant, and is metabolized as an energy source via the glycolysis system, so that the growth of the plant can be further maintained and promoted and the acid resistance of the plant can be further enhanced.

A third feature of the present invention is that the sugar or sugars are at least one selected from glucose, fructose, trehalose, and sucrose.

### (Operational Effect)

The sugar or sugars are at least one selected from glucose, fructose, trehalose, and sucrose. These sugars are commercially available, inexpensive, and easily available.

A fourth feature of the present invention is a plant growth promoting agent usable in the low light cultivation method of any one of claims 1 to 3.

### (Operational Effect)

A low light cultivation method having the operational effect of any one of claims 1 to 3 can be easily carried out by giving the plant growth promoting agent of the present invention to a plant.

In embodiments of the present invention, in order to cultivate a plant under low light conditions, such as indoors or the like, a plant growth promoting agent as described below is given directly to leaves, stalks or the like of the plant, or to soil or the like in which the plant grows. Conditions under which the present invention is carried out will be described below.

### (Plants)

Examples of plants to which the present invention can be applied include, but are not limited to, houseplants, such as Epipremnum aureum, Pachira aquatica, Ficus elastica, Dracaena deremensis, Schefflera arboricola, Dizygotheca elegantissima, Chamaedorea elegans, Cordyline fruticosa, Stenocarpus sinuatus, Rhapis excelsa, Murraya exotica, Strelitzia augusta, Cinnamomum zeylanicum, Laurus nobilis, Ficus benjamina, and the like, garden plants, such as Hibiscus hybridus, Ipomoea nil, and the like, crops, such as cereals, teas, vegetables, and fruits, and the like.

### (Light Conditions)

The present invention can be carried out not only under typical illuminance conditions (light conditions under which the growth of a cultivated plant is not inhibited), but also under low illuminance conditions (light conditions under which the growth of a cultivated plant can be inhibited). Specifically, the term "low illuminance" or "low light" refers to an illuminance of 50 lux to 500 lux.

### (Plant Growth Promoting Agent)

The plant growth promoting agent of the present invention means a chemical agent that includes at least an organic acid or organic acids described below, can reduce low-light stress of a plant even under low light conditions and can suppress the growth of a harmful microorganism (bacteria, molds, etc.) in soil.
The plant growth promoting agent of the present invention is not limited to a case where the organic acids described below are each used singly (e.g., citric acid itself is used as the plant growth promoting agent). The present invention encompasses a case where a mixture of the organic acid and, optionally, any of various sugars or the like described below is used (e.g., a mixture of citric acid and sucrose or the like is used as the plant growth promoting agent).
Note that the plant growth promoting agent of the present invention can be formulated by, for example, dissolving appropriate amounts of an organic acid and a sugar described below in a solution containing distilled water and an appropriate inorganic salt or the like to predetermined concentrations. In this case, the pH of the solution may be adjusted by adding an appropriate reagent (an alkali or an acid).

### (Organic Acids)

Organic acids that can be applied to the present invention are those that can constitute a plant metabolic pathway, such as the glycolysis system, the TCA cycle, or the glyoxylate cycle, and can be absorbed by a plant. Preferably, the organic acids are citric acid, malic acid, and succinic acid, which belong to an organic acid group constituting the TCA cycle or the glyoxylate cycle, though not limited to these. The organic acids may be any organic acids that can maintain and promote the growth of a plant under low light conditions.
Note that these organic acids can be used singly or in any combination. In particular, if these organic acids are used singly, the concentration is preferably within the range of 0.05 mM to 10 mM.

### (Sugars)

Examples of sugars which can be applied to the present invention include, but are not limited to, glucose, fructose, trehalose, sucrose, and the like. Any sugar that can be absorbed by a plant and can maintain and promote the growth of the plant even under low light conditions can be used. Note that these sugars can be used singly or in any combination.
In particular, if these sugars are used singly, the concentration is preferably within the range of 1.5 to 3%.

### (Soil)

Examples of types of soil that can be used in the present invention include, but are not limited to, Akadama soil, Kanuma soil, black soil, red soil, clayey soil, leaf mold, peat moss, pearlite, vermiculite, chaff charcoal, LECA stone (clay pebbles), and the like.
Also, the pH of soil is adjusted, by using the plant growth promoting agent, to pH that can kill or suppress the proliferation of bacteria, molds, and the like (harmful microorganisms) in soil. The pH is preferably within the range of pH 2.7 to pH 6.5.

### (Other conditions)

The growth temperature is not particularly limited as long as it is an appropriate temperature at which a plant to which the present invention is applied can grow and the growth is not inhibited.
Also, watering is performed as appropriate so that a plant to which the present invention is applied can grow and the growth is not inhibited (due to dry from a shortage of water, root rot from excessive watering, etc.).

### (Methods for Carrying Out the Invention)

The low light cultivation method of the present invention is any cultivation method with which an effective component, such as an organic acid, a sugar or the like, contained in the plant growth promoting agent can be absorbed by a plant. Examples of the cultivation method include cultivation by a stalk and leaf treatment in which the plant growth promoting agent is given to leaves and stalks, cultivation by a soil treatment in which the plant growth promoting agent is given to soil in which a plant grows, and the like. Also, the plant growth promoting agent can be absorbed by roots in hydroponics.
Also, when the plant cultivation method of the present invention is carried out, various known agricultural chemicals, fertilizers (organic fertilizers or inorganic fertilizers), plant activators, and the like as well as the plant growth promoting agent may be optionally added to soil, a nutrient solution, or the like.

### (Other Embodiments)

1. When the low light cultivation method of the present invention is carried out, a plant growth promoting agent containing at least the organic acid(s) and, optionally, the sugar(s), an inorganic salt(s), and any of various known agricultural chemicals, fertilizers (organic fertilizers or inorganic fertilizers), and plant activators, and the like may be previously formulated, and the plant growth promoting agent may be given to a plant as required.

### Best Mode for Carrying out the Invention

Next, the present invention will be described by way of example. The present invention is not limited to examples below.

### (Example 1) Low Light Cultivation Experiment

As a plant, morning glory (Pharbitis nil var. Violet) seedlings (day 7 after germination) were used. Experiments were conducted in an incubator (low temperature of 23°C) in daily cycles where a light period (200 lux) is 14 hours and a dark period is 10 hours in a day. Morning glory seeds (purchased from Marutane Co., Ltd., Kyoto) were sown in black plastic pots (commercially available No.105 size: diameter 105 cm, height 90 cm). Vermiculite was used as culture medium (the wet weight of vermiculite in a pot was 350 g).

250 mL of a test solution was given to each pot once every four days. Test data was taken from 10 morning glory seedlings (young plants) grown per pot. After start of the test, the number of seedlings that lodged was counted every day. A lodging criterion is that the hypocotyl (a rachis under a cotyledon) of a young plant lodges and the cotyledon contacts culture medium, or the whole cotyledon died. Lodged young plants were removed each time. Note that the effect was evaluated using the average value of the numbers of days until lodging. The average value was calculated as follows. For example, when three plants lodged on day 9, four plants lodged on day 10, and three plants lodged on day 11, then the average value is 10.0 (=(9×3+10×4+11×3)/10).

### (1) Effect Of Organic Acid On Number Of Days Until Lodging Of Morning Glory Young Plant Under Low Light

Eight test solutions (250 mL) containing respective different organic acids were formulated as follows.
Eight organic acids (aminolevulinic acid, citric acid, malic acid, succinic acid, tartaric acid, acetic acid, oxalic acid, and lactic acid) were prepared. Each organic acid was dissolved in a 500-fold dilution of a liquid fertilizer (VIGOR LIFE V) (a solution in which VIGOR LIFE V was diluted 500-fold with distilled water). Thereafter, the solution was adjusted to pH 5.0 with potassium hydroxide. Note that the organic acid concentration of each test solution was 5 mM.
A 500-fold dilution of VIGOR LIFE V was used as a control test solution.
The eight test solutions and the control test solution were used to conduct the low light cultivation experiment. The results are shown in Table 1 below. Note that the upper row of Table 1 indicates the organic acids contained in the test solutions (the control test solution contained no organic acid). Also, the lower row of Table 1 indicates the average values (days) of the numbers of days until lodging of the morning glory young plants. It is indicated that the higher the average value, the longer the period during which the morning glory grew (i.e., a test solution having a higher average value is more effective to this low light cultivation).

**Table 1**

| Test solution | Control test solution | Ami nole vuli nic acid | Citric acid | Malic acid | Succinic acid | Tartaric acid | Acetic acid | Oxalic acid | Lactic acid |
|---|---|---|---|---|---|---|---|---|---|
| Average value (days) | 8.3 | 2.5 | 12.9 | 11.1 | 10.4 | 4.9 | 3.9 | 3.7 | 6.1 |

It was found from the results of Table 1 that, of the eight organic acids, the test solutions containing citric acid, malic acid, or succinic acid have higher values (the numbers of days) than that of the control test solution, and therefore, these organic acids (citric acid, malic acid, and succinic acid) are effective to this low light cultivation.
Note that, when the concentration of each organic acid was within the range of 0.05 to 10 mM, results similar to those described above were obtained, though the results are not shown.

### (2) Effect Of Sugars On Number Of Days Until Lodging Of Morning Glory Young Plant Under Low Light

Six test solutions (250 mL) containing respective different sugars were formulated as follows.
Six sugars (sucrose, glucose, fructose, trehalose, palatinose, and xylose) were prepared. Each sugar was dissolved in a 500-fold dilution of a liquid fertilizer (VIGOR LIFE V) (a solution in which VIGOR LIFE V was diluted 500-fold with distilled water). Note that the sugar concentration of each test solution was 3%.
Also, a 500-fold dilution of VIGOR LIFE V was used as a control test solution.

Further, a test solution containing both citric acid and sucrose was formulated as follows.
Appropriate amounts of citric acid and sucrose were dissolved in a 500-fold dilution of a liquid fertilizer (VIGOR LIFE V) (a solution in which VIGOR LIFE V was diluted 500-fold with distilled water), and thereafter, the solution was adjusted to pH 5.0 with potassium hydroxide. Note that the citric acid concentration and the sucrose concentration of this test solution were 5 mM and 3%, respectively.

The eight test solutions and the control test solution were used to conduct the low light cultivation experiment. The results are shown in Table 2 below.
Note that the upper row of Table 2 indicates the sugars contained in the test solutions (the control test solution contained no sugar). Also, the lower row of Table 2 indicates the average values (days) of the numbers of days until lodging of the morning glory young plants. It is indicated that the higher the average value, the longer the period during which the morning glory grew (i.e., a test solution having a higher average value is more effective to this low light cultivation).

**Table 2**

| Test solution | Control test solution | Sucrose | Glucose | Fructose | Trehalose | Palatinose | Xylose | Sucrose +citric acid |
|---|---|---|---|---|---|---|---|---|
| Average value (days) | 7.8 | 25.9 | 21.4 | 22.1 | 21.9 | 9.6 | 10.1 | 29.0 |

It was found from the results of Table 2 that all of the six test solutions have higher values (the numbers of days) than that of the control test solution. Among the six sugars, sucrose, glucose, fructose, and trehalose are particularly effective to this low light cultivation.
Also, the test solution containing both citric acid and sucrose has a higher value (the number of days) than that containing each sugar singly. Therefore, it was found that, when a combination of a specific organic acid and sugar is given to a plant under low light cultivation, the growth of the plant is further promoted than when those are given singly.

Note that, when the concentration of each sugar was within the range of 1.5 to 3%, results similar to those described above were obtained, though the results are not shown.

### (Example 2)

Low light cultivation was carried out using aminolevulinic acid, which is conventionally employed in low light cultivation, and citric acid and sucrose, which exhibited the highest effect in Example 1, and further, a houseplant weeping fig (Ficus benzyamina) as a plant.

Aminolevulinic acid, citric acid, and sucrose were appropriately added to respective inorganic solutions (1000-fold dilutions of VIGOR LIFE V) to formulate three reagents. The inorganic solution was used as a control reagent. (Reagent 1: the inorganic solution in which aminolevulinic acid is dissolved, Reagent 2: the inorganic solution in which citric acid is dissolved, and Reagent 3: the inorganic solution in which citric acid and sucrose are dissolved).

Note that, in respective reagents, the citric acid concentration was 5 mM, the sucrose concentration was 3%, and the aminolevulinic acid concentration was 100 ppm. The reagents containing citric acid (Reagent 2 and Reagent 3) were adjusted to pH 5.0 with potassium hydroxide.

Low light cultivation was conducted using the reagents and a houseplant weeping fig, with two methods below.
Regular cultivation: four commercially available weeping fig plants in No.4-sized pots were prepared. The four reagents (Reagents 1 to 3 and the control reagent) were given to the respective plants in an amount of 50 mL once (Monday) every week. Watering was performed in an amount of 50 mL twice (Wednesday and Friday) every week. Note that light conditions were being in a shaded greenhouse with 200 lux or less.
Spray cultivation: two commercially available weeping fig plants in No.4-sized pots were prepared. After 50 mL of the inorganic solution was given to each pot, the two reagents (Reagent 1 and Reagent 2) were given to the respective weeping fig plants in an amount of 10 mL for each by spraying. Note that the other conditions (watering and light conditions) were similar to those for the regular cultivation.

The effect of each reagent was evaluated by counting the number of leaves for each pot and calculating the survival ratio (%) of leaves every week. The results are shown in Table 3 below. Note that the leaf survival ratio (%) was calculated as a "survival ratio (%) = the number of counted weeping fig leaves / the number of weeping fig leaves before low light cultivation (initial value) × 100". It is indicated that the higher the value, the more the surviving leaves without falling, i.e., the longer the period during which weeping fig grew (i.e., a reagent exhibiting a higher survival ratio is more effective to this low light cultivation).

**Table 3**

| | Reagent | | Survival ratio after 1 week (%) | Survival ratio after 2 weeks (%) | Survival ratio after 3 weeks (%) | Survival ratio after 4 weeks (%) |
|---|---|---|---|---|---|---|
| Regular cultivation | Control reagent (inorganic solution) | | 98.6 | 95.1 | 84.6 | 46.5 |
| | Reagent (inorganic | 1 | 97.6 | 87.8 | 60.2 | 33.9 |
| | solution aminolevulinic acid) | + | | | | |
| | Reagent | 2 | 98.7 | 97.9 | 87.6 | 50.0 |
| | (inorganic solution + citric acid) | | | | | |
| | Reagent | 3 | 99.6 | 98.2 | 94.2 | 85.9 |
| | (inorganic solution + citric acid + sucrose) | | | | | |
| Spray cultivation | Spraying Reagent | 1 | 98.1 | 97.2 | 81.6 | 30.7 |
| | (inorganic solution | + | | | | |
| | aminolevulinic acid) | | | | | |
| | Spraying Reagent | 2 | 98.5 | 96.9 | 86.2 | 45.8 |
| | (inorganic solution + citric acid) | | | | | |

As shown in Table 3, Reagent 1 (the inorganic solution + aminolevulinic acid) exhibited a lower survival ratio (%) after four weeks than that of the control reagent (the inorganic solution) in both the regular cultivation and the spray cultivation (the control reagent: 46.5%, the regular cultivation: 33.9%, the spray cultivation: 30.7%). Thus, aminolevulinic acid does not effectively function in this low light cultivation.

Reagent 2 (the inorganic solution + citric acid) exhibited substantially the same survival ratio (%) after four weeks as that of the control reagent (the inorganic solution) in the spray cultivation (the control reagent: 46.5%, the spray cultivation: 45.8%), i.e., an effect similar to that of the control reagent (the inorganic solution) was obtained. Reagent 2 also exhibited a higher survival ratio (%) after four weeks than that of the control reagent (the inorganic solution) in the regular cultivation (the control reagent: 46.5%, the regular cultivation: 50.0%), i.e., an effect similar to or higher than that of the control reagent was obtained. Therefore, it was found that citric acid is effective to this low light cultivation.

Also, Reagent 3 (the inorganic solution + citric acid + sucrose) particularly exhibited a considerably higher survival ratio (%) after four weeks than those of the control reagent (the inorganic solution) and Reagent 2 (the inorganic solution + citric acid) in the regular cultivation (the control reagent: 46.5%, Reagent 2: 50.0%, and Reagent 3: 85.9%).

Thus, Reagent 3 exhibited a higher survival ratio (%) than that of Reagent 2 containing citric acid singly. Therefore, also in this low light cultivation, as is similar to Example 1, it was found that, when a combination of a specific organic acid and sugar is given to a plant under low light cultivation, the growth of the plant can be further promoted than when those are given singly.

### (Example 3)

Five commercially available houseplants (a chamaedorea(Chamaedorea elegans), a schefflera(Schefflera arboricola), a dizygotheca(Dizygotheca elegantissima), cinnamon(Cinnamomum zeylanicum), a rhapis(Rhapis excelsa), and orange jasmine(Murraya exotica)) in No.10-sized pots were prepared, two pots for each houseplant (one pot for control and the other for test). Low light cultivation was conducted indoors with 500 lux or less.
A reagent applied here was prepared as follows. Appropriate amounts of citric acid and sucrose were dissolved in tap water to concentrations of 5 mM (citric acid) and 3% (sucrose). Thereafter, the solution was adjusted to pH 5.0 with potassium hydroxide.

Tap water was given to the control plants in an amount of 500 mL per pot once every week. Tap water and the reagent were alternately given to the test plants in an amount of 500 mL per pot every week (each of the tap water and the reagent was given every other week).
The effect of application of the reagent (the effect of maintaining and promoting the growth of the plant in this low light cultivation) was evaluated by counting the number of leaves for each pot after a predetermined time had passed and calculating a leaf survival ratio (%) as is similar to Example 2.

As a result, in the case of the chamaedorea, the leaf survival ratio after 3.5 months was 85% for the control plant and 103% for the test plant, i.e., the application effect was confirmed. In the case of the schefflera, the leaf survival ratio after 3.5 months was 0% for the control plant and 22% for the test plant, i.e., the application effect was confirmed. In the case of the dizygotheca, the leaf survival ratio after 2.5 months was 14% for the control plant and 86% for the test plant, i.e., the application effect was confirmed. In the case of the cinnamon, the leaf survival ratio after 5 months was 51% for the control plant and 97% for the test plant, i.e., the application effect was confirmed. In the case of the rhapis and the orange jasmine, more leaves remained after one month in the test plants than in the control plans, i.e., the application effect was confirmed. Note that, in all of the test plants, the growth of a harmful microorganism, such as molds and the like, was not confirmed.

### (Example 4)

Two commercially available No.4-sized pots of Epipremnum aureum were prepared (one pot for control and the other for test). Low light cultivation was conducted indoors with 200 lux.
A reagent applied here was prepared as follows. Appropriate amounts of citric acid and sucrose were dissolved in tap water to concentrations of 2.5 mM (citric acid) and 1.5% (sucrose). Thereafter, the solution was adjusted to pH 5.0 with potassium hydroxide.
Tap water was given to the control plant in an amount of 100 mL per pot once every week. The reagent was given to the test plant in an amount of 100 mL per pot once every week.

The effect of application of the reagent (the effect of maintaining and promoting the growth of the plant in this low light cultivation) was evaluated by counting the number of leaves for each pot after a predetermined time had passed and calculating a leaf survival ratio (%) as is similar to Example 2.
As a result, the leaf survival ratio after 10 months was 10% for the control plant and 85% for the test plant, i.e., the application effect was confirmed.

### (Example 5)

Two commercially available No.10-sized pots of Laurus nobilis were prepared (one pot for control and the other for test). Low light cultivation was conducted indoors with 200 lux.
A reagent applied here was prepared as follows. Appropriate amounts of citric acid and sucrose were dissolved in tap water to concentrations of 5 mM (citric acid) and 3% (sucrose). Thereafter, the solution was adjusted to pH 5.0 with potassium hydroxide.

Tap water was given to the control plant in an amount of 500 mL per pot once every week. Tap water and the reagent were alternately given to the test plants in an amount of 500 mL per pot every week (each of the tap water and the reagent was given every other week).
The effect of application of the reagent (the effect of maintaining and promoting the growth of the plant in this low light cultivation) was evaluated by counting the number of leaves for each pot after a predetermined time had passed and calculating a leaf survival ratio (%) as is similar to Example 2.
As a result, the leaf survival ratio after 10 months was 20% for the control plant and 50% for the test plant, i.e., the application effect was confirmed.

### (Example 6)

Two commercially available No.5-sized pots of hibiscus(Hibiscus hybridus) were prepared (one pot for control and the other for test). Low light cultivation was conducted indoors with 200 lux.
A reagent applied here was prepared as follows. Appropriate amounts of citric acid and sucrose were dissolved in tap water to concentrations of 5 mM (citric acid) and 3% (sucrose). Thereafter, the solution was adjusted to pH 5.0 with potassium hydroxide.

Tap water was given to the control plant in an amount of 200 mL per pot once every week. Tap water and the reagent were alternately given to the test plants in an amount of 200 mL per pot every week (each of the tap water and the reagent was given every other week).
The effect of application of the reagent (the effect of maintaining and promoting the growth of the plant in this low light cultivation) was evaluated by counting the number of leaves for each pot after a predetermined time had passed and calculating a leaf survival ratio (%) as is similar to Example 2.
As a result, the leaf survival ratio after 2 months was 20% for the control plant and 85% for the test plant, i.e., the application effect was confirmed.

### Industrial Applicability

The present invention can be used in a low light cultivation method for cultivating a plant under low light conditions.

## Claims

1. A low light cultivation method for cultivating a plant under low light conditions of an illuminance of 50 lux to 500 lux while giving a plant growth promoting agent to the plant, wherein
the plant growth promoting agent contains at least one selected from the group consisting of citric acid, malic acid, and succinic acid.

2. The low light cultivation method according to claim 1, wherein the plant growth promoting agent further contains a sugar or sugars.

3. The low light cultivation method according to claim 2, wherein the sugar or sugars are at least one selected from the group consisting of glucose, fructose, trehalose, and sucrose.

4. Use of a plant growth promoting agent for cultivating a plant under low light conditions of an illuminance of 50 lux to 500 lux, wherein the plant growth promoting agent contains at least one selected from the group consisting of citric acid, malic acid, and succinic acid.

## Patentansprüche

1. Schwachlicht-Kultivierungsverfahren zur Kultivierung einer Pflanze unter schwachen Lichtverhältnissen einer Beleuchtungsstärke von 50 Lux bis 500 Lux, während der Pflanze ein pflanzenwachstumsfördernder Wirkstoff gegeben wird, wobei der pflanzenwachstumsfördernde Wirkstoff mindestens einen Bestandteil enthält ausgewählt aus der Gruppe bestehend aus Citronensäure, Äpfelsäure und Bernsteinsäure.

2. Schwachlicht-Kultivierungsverfahren nach Anspruch 1, wobei der pflanzenwachstumsfördernde Wirkstoff zudem einen Zucker oder mehrere Zucker enthält.

3. Schwachlicht-Kultivierungsverfahren nach Anspruch 2, wobei der Zucker oder die Zucker mindestens einer ist ausgewählt aus der Gruppe bestehend aus Glucose, Fructose, Trehalose und Saccharose.

4. Verwendung eines pflanzenwachstumsfördernden Wirkstoffs zur Kultivierung einer Pflanze unter schwachen Lichtverhältnissen einer Beleuchtungsstärke von 50 Lux bis 500 Lux, wobei der pflanzenwachstumsfördernde Wirkstoff mindestens einen Bestandteil enthält ausgewählt aus der Gruppe bestehend aus Citronensäure, Äpfelsäure und Bernsteinsäure.

## Revendications

1. Méthode de culture sous faible lumière pour cultiver une plante dans des conditions de faible lumière d'un éclairement de 50 à 500 lux tout en apportant un agent favorisant la croissance végétale à la plante, dans laquelle l'agent favorisant la croissance végétale contient au moins un agent choisi dans le groupe consistant en l'acide citrique, l'acide malique, et l'acide succinique.

2. Méthode de culture sous faible lumière selon la revendication 1, dans laquelle l'agent favorisant la croissance végétale contient, en outre, un sucre ou des sucres.

3. Méthode de culture sous faible lumière selon la revendication 2, dans laquelle le sucre ou les sucres sont au moins un sucre ou des sucres choisis dans le groupe consistant en le glucose, le fructose, le tréhalose, et le saccharose.

4. Utilisation d'un agent favorisant la croissance végétale pour cultiver une plante dans des conditions de faible lumière d'un éclairement de 50 à 500 lux, dans laquelle l'agent favorisant la croissance végétale contient au moins un agent choisi dans le groupe consistant en l'acide citrique, l'acide malique, et l'acide succinique.
